(19) Europäisches Patentamt

European Patent Office

Office européen des brevets

(11) **EP 1 183 523 B1**

(12) **EUROPÄISCHE PATENTSCHRIFT**

(45) Veröffentlichungstag und Bekanntmachung des Hinweises auf die Patenterteilung:
**12.04.2006 Patentblatt 2006/15**

(21) Anmeldenummer: **00940345.2**

(22) Anmeldetag: **07.06.2000**

(51) Int Cl.:
***G01N 21/35*** (2006.01)

(86) Internationale Anmeldenummer:
**PCT/EP2000/005262**

(87) Internationale Veröffentlichungsnummer:
**WO 2000/075640 (14.12.2000 Gazette 2000/50)**

(54) **ANALYSEGERÄT**

ANALYSIS APPARATUS

APPAREIL D'ANALYSE

(84) Benannte Vertragsstaaten:
**AT BE CH CY DE DK ES FI FR GB GR IE IT LI LU MC NL PT SE**

(30) Priorität: **08.06.1999 DE 19926121**

(43) Veröffentlichungstag der Anmeldung:
**06.03.2002 Patentblatt 2002/10**

(73) Patentinhaber: **CS CLEAN SYSTEMS AG**
**85732 Ismaning (DE)**

(72) Erfinder:
• **WIECHERS, Joachim**
**D-82152 Planegg (DE)**

• **RIESENBERG, Rainer**
**D-07749 Jena (DE)**
• **KOPATZKI, Eckard**
**D-85635 Höhenkirchen-Siegertsbrunn (DE)**

(74) Vertreter: **Berngruber, Otto et al**
**Patentanwälte**
**Haft, von Puttkamer**
**Berngruber, Czybulka**
**Franziskanerstrasse 38**
**81669 München (DE)**

(56) Entgegenhaltungen:
**DE-A- 4 437 188**   **DE-A- 19 808 128**
**US-A- 4 281 248**   **US-A- 5 876 674**

EP 1 183 523 B1

## Beschreibung

Die Erfindung bezieht sich auf ein Analysegerät zur Bestimmung der Konzentration eines oder mehrerer Stoffe in einem Gemisch durch Messung der konzentrationsabhängigen molekülspezifischen Extinktion nach dem Oberbegriff des Anspruchs 1.

Nicht-dispersive Photometer zur Bestimmung der Konzentration eines Stoffes in einer Mischung sind weithin bekannt und werden für verschiedenste Messaufgaben eingesetzt. So basieren kommerzielle, medizinische Messgeräte zur Bestimmung des $CO_2$-Gehalts in der respirativen Luft, sogenannte Capnometer, auf diesem Prinzip. In diesen Geräten wird die Schwächung einer eingebrachten Infarot-Strahlung auf der für $CO_2$ charakteristischen Wellenlänge von 4.26 μm nach dem Gesetz von Lambert-Beer

$$I = I_0 \exp[-kCL]$$

mit

I: detektierte Intensität
$I_0$: eingestrahlte Intensität
k: spezifischer Extinktionskoeffizient
C: Konzentration
L: optische Weglänge

als Maß für die in der Probe vorhandene $CO_2$-Konzentration ausgewertet.

In der einfachsten Form funktionieren nicht-dispersive Photometer nach einem Einstrahlverfahren (vgl. EP 0 794 423 A1).

Eine in ihrer Intensität als konstant vorausgesetzte IR-Strahlung wird ausgehend von einer Strahlungsquelle durch das mit der zu testenden Probe durchsetzte Volumen geleitet und hinter diesem mit einem opto-elektrischen Detektor als Strahlungsempfänger auf ihre Intensität vermessen. Die Selektivität für den nachzuweisenden Stoff wird durch die Einschränkung des IR-Spektrums auf die charakteristische(n) Wellenlänge(n) durch ein Schmalbandfilter, das entweder hinter dem Strahler oder vor dem Empfänger angeordnet ist, gewährleistet.

Alternativ wird das ungefilterte Licht hinter dem Absorptionsraum in einem abgeschlossenen, mit dem zu bestimmenden Stoff gefüllten Raum geleitet, in dem die entsprechend der im Absorptionsraum vorhandenen Konzentration auf der/den charakteristischen Wellenlange(n) geschwächte Strahlungsenergie der Strahlungsquelle uber optische Anregung genau der charakteristischen Wellenlange(n) in thermische Energie umgewandelt und als Druck nachgewiesen wird (opto-pneumatischer Detektor).

Um das für die geforderte Messgenauigkeit verlangte Signal-Rausch-Verhältnis zu erreichen, ist eine periodische Modulation des Signals unerläßlich. Dies wird klassisch durch den Einsatz rotierender Strahlunterbrecherscheiben, sog. Chopper, bewerkstelligt. Da es sich hierbei um mechanisch bewegte Bauteile handelt, hat diese Losung inharente Nachteile bezüglich der minimal erreichbaren Größe, der Störanfälligkeit gegen externe Krafteinwirkung und der durch die Rotation bedingten Störeffekte wie Vibrationen oder Schall. In modernen Geräten werden deshalb kompakte, thermische Dünnschicht- oder Dickschicht-Strahlungsquellen verwendet, die mit einem getakteten Strom betrieben werden und so selbst eine periodisch modulierte Strahlung aussenden.

Das Einstrahlverfahren mit einer Strahlungsquelle und einem Empfänger wird jedoch kaum angewendet, da es aufgrund von Temperatur- und Intensitätsschwankungen sowie Alterungserscheinungen der Strahlungsquelle, der optischen Elemente und der Empfänger zu einer starken Drift des Ausgangssignals kommt. Um diese Effekte zu kompensieren, wird üblicherweise ein Zweistrahlverfahren benutzt, bei dem ein zweiter Strahlengang, der nicht von dem zu messenden Stoff beeinflusst wird, als Referenz angewendet wird. Die Signale des ersten (Mess-) und zweiten (Referenz-) Strahlengangs werden ins Verhältnis gesetzt und dieses zur Bestimmung der Konzentration herangezogen.

Zweistrahlverfahren, bei denen die Strahlung der Strahlungsquelle in einem Mess- bzw. Referenzstrahlengang zu zwei Empfängern aufgeteilt wird, lassen sich mit in der Anzahl der Strahlungsquellen, Küvetten und/oder Empfänger voneinander abweichenden optischen Geräten realisieren. Ein Gerät mit zwei Strahlungsquellen, einer Küvette und zwei Empfängern ist z.B. in US 3,734,631 beschrieben. Die Kompensation von thermischen und Alterungseffekten in der Küvette ist dem Verfahren intrinsisch. Zudem ist ein erheblicher mess- und regeltechnischer Aufwand erforderlich, durch den die Strahlungsleistung der beiden Strahlungsquellen konstant gehalten wird, unter anderem durch Verwendung von zwei zusätzlichen Empfängern zu Vermessung der von den Strahlungsquellen abgestrahlten Strahlungsleistung vor Durchgang durch die Küvette. Eine Vereinfachung dieses Aufbaus in der Hinsicht, dass beide Strahlengänge auf einen Empfänger geleitet werden, ist in US 4,899,053 beschrieben. Eine Stabilisierung der Intensitäten der beiden Strahlungsquellen ist jedoch nicht vorgesehen.

Intensitätsschwankungen aufgrund von Temperaturschwankungen oder Alterungserscheinungen der Strahlungsquelle lassen sich intrinsisch kompensieren, wenn beide Strahlengänge, also Referenz- und Mess-Strahlengang, von der gleichen Strahlungsquelle bedient werden. Dazu muss eine Strahlteilung vorgenommen werden, die typischerweise durch Prismen oder halbdurchlässige, teilweise dichroische Spiegel vor oder hinter dem Absorptionsraum, realisiert wird (vgl. EP 0 834 732 A2).

Solche optischen Bauelemente reduzieren aber die Intensität, was das Signal-zu-Rausch-Verhältnis reduziert und damit die untere Nachweisgrenze verschlechtert. Außerdem können sich die spektralen Eigenschaften solcher Elemente mit der Zeit durch Ablagerungen oder durch den Angriff aggressiver Medien verändern, was zu einer Verschiebung des Intensitätsverhältnisses zwischen Mess- und Referenzstrahlengang führen kann.

Eine vorteilhafte Strahlteilung über abbildende Spiegel innerhalb des Probenraums, die ohne intensitätsschwächende Elemente auskommt, ist in DE 44 37 188 C2 beschrieben. Die zentrale Anforderung an den Referenzstrahlengang ist, dass er von Konzentrationsänderungen des zu messenden Stoffes in seiner Intensität nicht oder wesentlich schwächer als der Mess-Strahlengang beeinflußt wird. Dazu wird der Referenzstrahlengang praktisch vollständig durch einen transparenten Block aus Calciumfluorid geführt, in dessen Inneren keine Schwächung des Lichts durch die zu vermessende Substanz stattfindet. Ein solcher Block kann jedoch durch den Angriff aggressiver Medien mit der Zeit trüben. Zudem ist eine genaue Justierung der Spiegel und damit eine aufwendige Justiereinrichtung notwendig. Auch werden durch die justierbaren Spiegel Spalte und dgl. Hohlräume gebildet, die den Austausch des zu messenden Stoffes verzögern und damit zu Memory-Effekten führen.

Nach EP 0 780 681 A2 tritt der Referenzstrahl durch eine mit Referenzgas gefüllte Referenzküvette hindurch, was aber die oben beschriebenen Nachteile einer prismatischen Strahlteilung nach sich zieht. Außerdem lassen sich auf diese Weise Änderungen der optischen Eigenschaften der Messküvette nicht erfassen. Der Miniaturisierung solcher Aufbauten sind Grenzen gesetzt.

Alternativ werden Mess- und Referenzstrahl beide durch die Messküvette geführt, aber in verschiedenen Wellenlängenbereichen vermessen. Dabei wird der Referenzstrahl entweder so breitbandig gemessen, dass die Intensitätsänderung durch die Extinktion auf den charakteristischen Wellenlängen des zu messenden Stoffes nicht ins Gewicht fällt, oder er wird ebenso wie der Messstrahl schmalbandig gemessen, aber auf einer anderen Wellenlänge. Nachteil der ersten Methode ist, dass eine Änderung der spektralen Verteilung der Strahlungsquelle aufgrund von Temperaturschwankungen oder Alterungserscheinungen im allgemeinen Mess- und Referenzsignal verschieden beeinflussen wird. Nachteil der zweiten Methode ist die Unsicherheit über das Nichtauftreten einer Absorption bei der Referenzwellenlänge durch unbekannte Stoffe. Dies ist speziell für den Anwendungsfall der Raumluftüberwachung auf toxische Gase gefährlich, da eine Absorption auf der Referenzwellenlänge zu einer Reduzierung der Empfindlichkeit im Mess-Strahlengang führt.

Nach US 4,281,248 wird die Strahlung einer IR-Strahlungsquelle mit einem Chopper abwechselnd über einen Referenzstrahlengang und einen Messstrahlengang jeweils optopneumatischen Detektoren zugeführt. Das zu messende Gas strömt durch eine lange Küvette im Messstrahlengang und dann durch eine kurze Küvette im Referenzstrahlengang.

Nach US 5,876,674 wird die Strahlung einer Strahlungsquelle in zwei Strahlengänge geteilt und das zu messende Gas durch einen Absorptionsraum geleitet, welcher in jedem Strahlengang zwei als fluchtende Glasstäbe ausgebildete optische Elemente aufweist, die jeweils einen unterschiedlichen Abstand aufweisen, sodass die optische Weglänge im Absorptionsraum zwischen dem einen Paar von optischen Elementen größer ist als bei dem anderen Paar.

Der Erfindung liegt die Aufgabe zugrunde, ein kompaktes, gegen äußere mechanische und thermische Einflüsse stabiles Analysegerät zur Konzentrationsbestimmung durch Transmissionsmessung bereitzustellen, mit dem ein weiter Konzentrationsbereich -.wenige ppm bis einige zehn Prozent - zuverlässig und kontinuierlich bestimmt werden kann.

Dies wird erfindungsgemäß mit dem im Anspruch 1 gekennzeichneten Analysegerät erreicht. In den Unteransprüchen sind vorteilhafte Ausgestaltungen des erfindungsgemäßen Analysegeräts wiedergegeben.

Nach der Erfindung gehen zwei Strahlengänge, also ein erster Strahlengang von der Strahlungsquelle zu einem ersten Empfänger und ein zweiter Strahlengang von der Strahlungsquelle zu einem zweiten Empfänger, durch den Absorptionsraum hindurch, der die Probe mit dem Stoff enthält, dessen Konzentration bestimmt werden soll.

In beiden Strahlengängen wird auf der gleichen Wellenlänge gemessen. Die beiden Strahlengänge weisen jedoch eine unterschiedliche Länge auf, und zwar ist der erste Strahlengang wesentlich länger als der zweite Strahlengang, vorzugsweise mindestens doppelt, insbesondere mindestens viermal so lang. Dadurch wird die Strahlung, die den ersten langen Strahlengang passiert, bei Anwesenheit des nachzuweisenden Stoffes entsprechend stärker geschwächt als die Strahlung des kürzeren zweiten Strahlengangs.

In Abgrenzung zum Stand der Technik werden also nicht nur beide Strahlengänge vollständig durch die zu messende Probe geführt, sondern außerdem auf derselben Wellenlänge gemessen. Dadurch ergibt sich eine optische Equivalenz der beiden Strahlen, die wesentliche Nachteile der bisher beschriebenen Ansätze vermeidet. Durch die equivalente Strahlführung wirken sich evtl. mit der Zeit auftretende intensitätsschwächende Störeffekte auf beide Strahlengänge in gleichem Maße aus. Durch die Messung beider Strahlengänge auf der gleichen Wellenlänge ist das Meßergebnis unabhängig von der spektralen Verteilung der Strahlungsquelle, den spektralen Eigenschaften der optischen Elemente oder Änderungen derselben durch Alterungseffekte, da auch hier beide Strahlengänge in gleichem Maße beeinflußt werden.

Durch die stark unterschiedlichen Absorptionswege in den beiden Strahlengängen läßt sich weiterhin der Dynamikbereich des Gerätes vorteilhaft erweitern. Wenn bei hohen Konzentrationen des zu messenden Stoffes die Absorption im langen Strahlengang so stark ist, daß das am Detektor ankommende Signal unter die Rauschgrenze sinkt, kann das Signal aus dem kürzeren Strahlengang direkt ausgewertet werden. Der zu erreichende Dynamikgewinn entspricht dem Verhältnis der beiden Absorptionswege.

Aus der von den beiden Empfängern jeweils gemessenen Strahlungsintensität wird ein Intensitätsvergleichswert gebildet, beispielsweise der Quotient aus der vom ersten und zweiten Empfänger gemessenen Intensität, wobei dieser gemessene Intensitätsvergleichswert oder Intensitätsquotient einer bestimmten Konzentration des zu messenden Stoffes entspricht. Setzt man das o.a. Lambert-Beer-Gesetz für beide Strahlengänge an, bildet den Quotienten beider Gleichungen, logarithmiert und löst nach der Konzentration auf, erhält man

$$C \;=\; -1/(k\ L_1 \;-\; k\ L_2)\ \ln\ (I_1\ /\ I_2)$$

Andererseits kann man beide Gleichungen zuerst logarithmieren, entsprechend erweitern, voneinander subtrahieren und nach der eingestrahlten Intensität auflösen. Man erhält

$$I_0 \;=\; \exp[L_1\ \ln\ I_2 \;-\; L_2\ \ln\ I_1)\ /\ (L_1 \;-\; L_2]$$

Aus der Auswertung der Signale beider Empfänger läßt sich also neben der Bestimmung der Konzentration C auch eine Aussage über die eingestrahlte Leistung $I_0$ gewinnen. Auch wenn dieser Wert aus technischen Gründen nicht zur Regelung der Strahlungsquelle herangezogen wird, läßt er sich zu einer redundanten Funktionsprüfung des Analysegerätes verwenden.

Das Verfahren läßt sich nicht nur einkanalig, also für die Bestimmung der Konzentration eines Stoffes in einer Probe, sondern auch mehrkanalig, also für die gleichzeitige Bestimmung der Konzentrationen mehrerer Stoffe in einem Gemisch, durchführen. Im letzteren Fall werden für jeden einzelnen zu messenden Kanal ein Paar von Strahlengängen, ein erster langer und ein zweiter kurzer, benötigt. Die Strahlengänge aller Kanäle werden aber erfindungsgemäß von derselben Strahlungsquelle bedient und durch dieselbe Probe geführt.

Das erfindungsgemäße Analysegerät oder Photometer ist insbesondere zur Bestimmung von Stoffen in Gasgemischen anwendbar. Es kann jedoch auch zur Konzentrationsbestimmung eines Stoffes in einer Flüssigkeit eingesetzt werden.

Durch den monolithischen Aufbau und die dadurch erreichte hohe mechanische Stabilität ist das erfindungsgemäße Analysegerät druckstabil und außerdem He-leckdicht. Dementsprechend läßt es sich zu Messungen im Druckbereich von Vakuum bis zu beispielsweise 10 bar verwenden.

Als Strahlung wird insbesondere Infrarotstrahlung verwendet. Die Infrarot-Strahlungsquelle durchstrahlt die zu analysierende Probe und die Empfänger oder Detektoren messen die Schwächung der IR-Strahlung. Die Selektivität für einen bestimmten Stoff wird durch schmalbandige Filterung des Lichts auf einen Bereich erreicht, in dem der Stoff durch Molekülschwingungen die IR-Strahlung in einem charakteristischen Wellenlängenbereich möglichst stark absorbiert.

Als IR-Strahlungsquelle wird vorzugsweise eine thermische IR-Strahlungsquelle verwendet; auch werden vorzugsweise thermische Empfänger, z.B. Pyrodetektoren oder Thermopiles eingesetzt. Es ist jedoch auch der Einsatz alternativer elektrooptischer Strahlungsquellen, wie Diodenlaser, die bei tiefen Temperaturen arbeiten, oder von Gaslasern denkbar. Als Empfänger lassen sich auch Quantendetektoren einsetzen.

Zur Bildung der beiden zu einem Kanal gehörigen unterschiedlich langen Strahlengänge im Absorptionsraum sind vorzugsweise zwei Spiegel im Absorptionsraum vorgesehen, die mit unterschiedlichem Abstand von der IR-Strahlungsquelle angeordnet sind und die Strahlung der Strahlungsquelle auf einen ersten bzw. zweiten Empfänger reflektieren.

Erfindungsgemäß werden die Spiegel vorzugsweise durch Hohlspiegel gebildet, und zwar werden vorzugsweise asphärische Spiegel eingesetzt, insbesondere Spiegel, deren Spiegeloberfläche durch einen Abschnitt eines Rotationsellipsoids gebildet wird. Damit wird das von der Strahlungsquelle ausgesendete Licht praktisch vollständig auf die Empfänger fokussiert.

Als Strahlungsquelle wird deswegen erfindungsgemäß ein in Dünn- oder Dickschichttechnik hergestellter IR-Flächenstrahler verwendet. Da Flächenstrahler eine dem Kosinus-Gesetz folgende Winkelverteilung der Emission aufweisen und damit im Gegensatz zu Punkt- oder Strichstrahlern eine stark vorwärts gerichtete Strahlung aussenden, läßt sich ihre Strahlung besonders vorteilhaft auf die Empfänger fokussieren. Um die Strahlungsquelle vor Alterung durch Gaskontakt oder Zerstörung bei Messung reaktiver Gase zu schützen, ist sie vorzugsweise außerhalb des Absorptionsraums angeordnet, also vom Absorpticnsraum und damit dem zu messenden Stoff durch ein optisches Fenster gasdicht getrennt.

Das Filter zum Ausfiltern des für den zu messenden Stoff charakteristischen Wellenlangenbereichs der IR-Strahlung kann im Fall der Einkanalmessung an der Strahlungsquelle oder an beiden Empfängern angeordnet sein. Im Fall der Mehrkanalmessung müssen die Filter vor den Empfängern angebracht sein.

Wenn die Filter vor den Empfängern angebracht werden, müssen sie paarweise genau gleiche optische Eigenschaften besitzen.

Um Unterschiede in den optischen Eigenschaften zu vermeiden, wie sie herstellungsbedingt sowohl zwischen verschiedenen Chargen eines Filtermaterials wie auch durch Inhomogenitäten auf ein und derselben Scheibe eines Filters vorkommen, werden die zu einem Kanal gehörigen Filter besonders vorteilhaft aus benachbarten Bereichen ein und derselben Filterscheibe geschnitten.

Das erfindungsgemäße Analysegerät weist vorzugsweise einen monolithischen Aufbau auf. Das heißt, die Spiegel sind einstückig mit dem Gehäuse ausgebildet, dessen Innenraum den Absorptionsraum bildet. Zur einstückigen Ausbildung mit dem Gehäuse können die Spiegel durch spanabhebende Bearbeitung der Gehäuseinnenseite, durch Bildung der Spiegel beim Gießen des Gehäuses oder dgl. hergestellt werden. Damit kann auch auf eine Montage der Spiegel und Justierung der Spiegel verzichtet werden.

Damit das Gehäuseinnere zugänglich ist, ist das Gehäuse vorzugsweise geteilt. Die Spiegel sind dann vorzugsweise mit dem selben Gehäuseteil einstückig ausgebildet. Durch diesen monolithischen Aufbau sind auch nur wenige Dichtungen erforderlich.

Da der Innenraum des Gehäuses zugleich den Absorptionsraum bildet, entfallen bei der monolithischen Ausbildung des erfindungsgemäßen Analysegeräts Trennflächen, Totvolumina und Halterungen zwischen Gehäuse und Spiegeln, Absorptionsraum und Gehäuse usw. Dadurch wird nicht nur ein schneller Medienaustausch ohne Memory-Effekte erreicht, vielmehr bleibt auch die Abbildungsgeometrie des erfindungsgemäßen Geräts bei Temperaturänderungen oder mechanischen Einflüssen zuverlässig erhalten.

Durch die einstückige Ausbildung der Spiegel mit dem Gehäuse bzw. dem einen Gehäuseteil, an dem sie vorgesehen sind, werden nämlich thermische Ausdehnungen bei Temperaturänderungen, die zu einer relativen Veränderung der Längen der beiden zu einem Kanal gehörigen Strahlengänge zueinander führen würden, in erster Ordnung kompensiert. Zugleich wird durch die einstückige Ausbildung der Spiegel mit dem Gehäuse bzw. dem einen Gehäuseteil eine hohe mechanische Stabilität erreicht und damit eine Signaländerung aufgrund äußerer mechanischer Einflüsse wirkungsvoll verhindert.

Das Gehäuse besteht vorzugsweise aus Metall. Damit wird neben einer hohen Steifigkeit und damit einer hohen mechanischen Stabilität eine rasche Temperaturkompensation sichergestellt, und zwar insbesondere durch Metalle hoher Wärmeleitfähigkeit und geringer Wärmekapazität, um einen möglichst schnellen Temperaturausgleich sicherzustellen.

Als Metall haben sich insbesondere Aluminiumwerkstoffe als geeignet erwiesen, also Aluminiummetall oder Aluminiumlegierungen, insbesondere spannungsfrei geglühte Metall- bzw. Aluminiumwerkstoffe, um eine langsame Drift durch innere Spannungen zu verhindern und dadurch eine hohe Langzeitstabilität zu gewährleisten.

Abgesehen davon, können aus Aluminiumwerkstoffen die Spiegel beispielsweise spanabhebend leicht herausgearbeitet werden. Zudem besitzen Spiegeloberflächen aus Aluminiumwerkstoffen eine hohe IR-Reflektivität. Auch sind Spiegeloberflächen aus Aluminiumwerkstoffen gegenüber den meisten Medien inert oder sie bilden eine korrosionshemmende Schutzschicht, beispielsweise gegenüber Sauerstoff (Luft) oder fluorhaltigen Verbindungen durch eine $Al_2O_3$- oder $AlF_3$-Schutzschicht. Diese ist im allgemeinen so dünn, daß die optischen Eigenschaften nicht beeinflußt werden.

Ein Metallgehäuse stellt zudem eine elektrische und magnetische Abschirmung sicher, was insbesondere bei sehr kleinen Signalen von Bedeutung ist. Das Elektronikgehäuse, das die Einrichtungen zur Signalverarbeitung aufnimmt, kann an das Photometergehäuse mit dem Absorptionsraum, der Strahlungsquelle, den beiden Empfängern und den beiden Spiegeln befestigt werden, wodurch für den gesamten Signalweg eine gute Abschirmung gewährleistet wird. Das Elektronikgehäuse wird dazu vorzugsweise aus dem gleichen Material gefertigt wie das Photometergehäuse, auch um Temperaturspannungen in Folge unterschiedlicher Temperaturausdehnungskoeffizienten zu verhindern.

Die Strahlung der Strahlungsquelle wird vorzugsweise moduliert, um empfängerseitig unabhängig von der Hintergrundstrahlung zu werden. Will man auf mechanisch bewegte Teile verzichten (Chopper), muß die Strahlungsquelle elektrisch modulierbar ausgebildet sein.

Das erfindungsgemäße Analysegerät kann beispielsweise zur Analyse umweltschädigender oder toxischer Gase eingesetzt werden, insbesondere zur kontinuierlichen Überwachung von Abgasen, beispielsweise zur Überwachung von Abgasreinigungsanlagen. Als umweltschädigende Gase, die mit dem erfindungsgemäßen Gerät analysiert werden können, sind insbesondere inerte, fluorhaltige Gase zu nennen, beispielsweise fluorierte oder perflorierte Kohlenwasserstoffe, Stickstofftrifluorid oder Schwefelhexafluorid.

Mit dem erfindungsgemäßen Gerät kann die Konzentration eines oder mehrerer Stoffe von z.B. weniger als 1 ppm bis 50% und mehr zuverlässig und kontinuierlich bestimmt werden.

Nachstehend ist eine einkanalige und eine zweikanalige Ausführungsform des erfindungsgemäßen Analysegeräts anhand der Zeichnungen beispielhaft näher erläutert. Darin zeigen:

Fig. 1          schematisch eine Ansicht des Strahlengangs des Geräts;

Fig. 2a und 2b    eine perspektivische Ansicht der beiden Gehäusehälften des Geräts im auseinandergeklappten Zustand; und

Fig. 3a und 3b    eine perspektivische Ansicht der beiden Gehäusehälften des zweikanaligen Geräts im auseinandergeklappten Zustand.

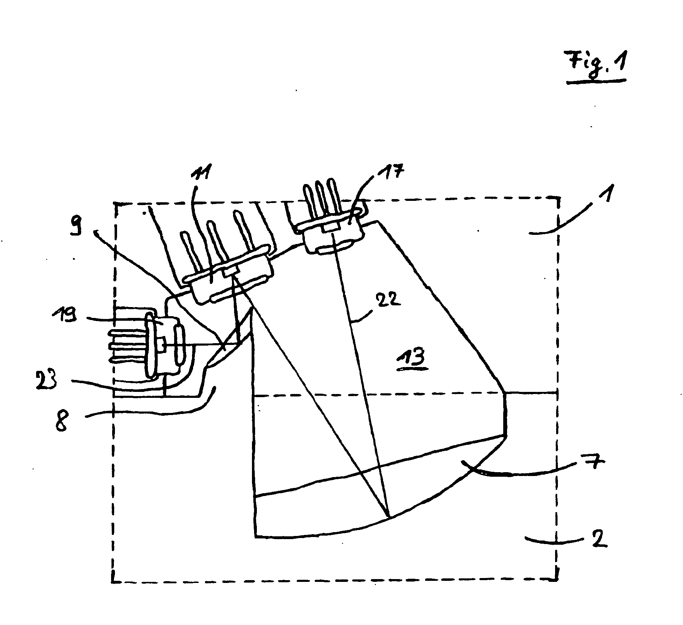

Danach weist das Gerät zwei etwa gleich große Gehäuseteile 1, 2 auf, die in Fig. 1 gestrichelt angedeutet sind.

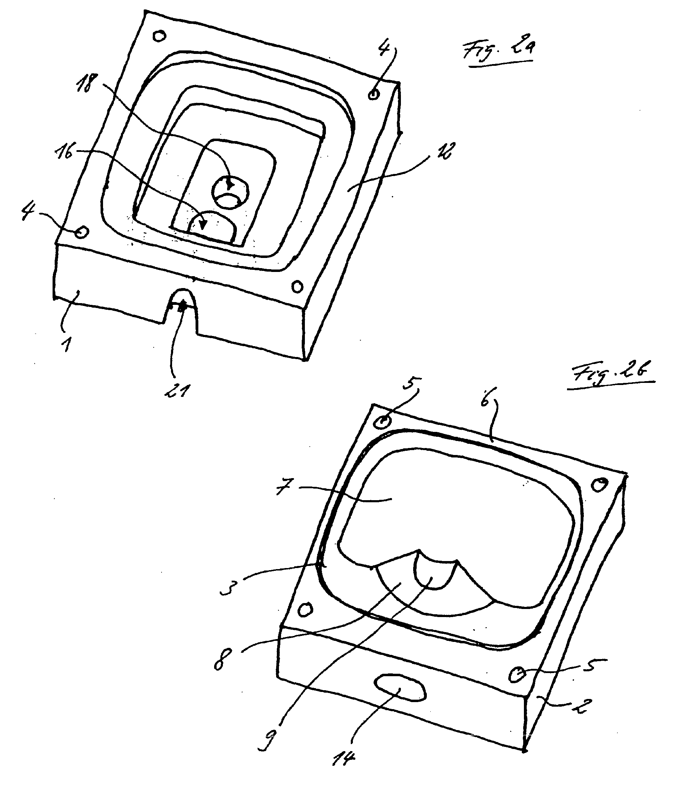

Gemäß Fig. 2 sind die beiden Gehäusehälften 1, 2 im wesentlichen quaderförmig ausgebildet, beispielsweise aus einem Aluminiumwerkstoff. Zwischen beiden Gehäusehälften 1, 2 ist ein Dichtring 3 angeordnet. Die Bohrungen 4, 5 dienen zum Zusammenschrauben der beiden Gehäusehälften 1, 2.

Aus der Gehäusehälfte 2 ist an der Innenseite 6 ein Hohlraum herausgearbeitet, der einen Hohlspiegel 7 bildet. Ferner ist an der Innenseite 6 der Gehäusehälfte 2 ein Vorsprung 8 herausgearbeitet und an der Spitze des Vorsprungs 8 ein kleinerer zweiter Hohlspiegel 9. Der erste Hohlspiegel 7 ist in einem wesentlich größeren Abstand von der IR-Strahlungsquelle 11 angeordnet als der zweite Hohlspiegel 9. Die beiden mit dem Gehäuseteil 2 einstückigen Hohlspiegel 7, 9 bilden jeweils Abschnitte eines Rotationsellipsoids, wobei die Achsen des Ellipsoids des ersten Hohlspiegels 7 entsprechend größer als die Achsen des Ellipsoids des zweiten Hohlspiegels 9 sind. Die beiden Ellipsoide sind derart angeordnet, daß sich jeweils die Strahlungsquelle und einer der beiden Empfänger in den Fokuspunkten befinden. Die Innenseite 12 des Gehäuseteils 1 weist ebenfalls einen Hohlraum auf, u.a. um den Vorsprung 8 aufzunehmen.

Die Hohlräume an den Innenseiten 6, 12 der beiden Gehäuseteile 2, 1 bilden den Absorptionsraum 13 des montierten Gehäuses (Fig. 1).

Das zu analysierende Medium wird dem Absorptionsraum 13 über eine Bohrung 14 in der Wand des Gehäuseteils 2 zugeführt, die dem Spiegel 7 gegenüberliegt (Fig. 2b). Der Medienaustritt erfolgt durch eine weitere nicht dargestellte Bohrung in dem Gehäuseteil 1 bzw. 2.

Die IR-Strahlungsquelle 11, die als Flächenstrahler ausgebildet ist, ist außerhalb des Gehäuseteils 1 an einer Öffnung 16 angeordnet. Ferner ist ein erster Empfänger 17 an einer Öffnung 18 und ein zweiter Empfänger 19 an einer weiteren Öffnung 21 des Gehäuseteils 1 vorgesehen (Fig. 2).

Gemäß Fig. 1 wird die von der Strahlungsquelle 11 kommende Strahlung an der dem Spiegel 7 zugewandten Kante des Spiegels 9 in je einen Strahlengang 22 bzw. 23 aufgeteilt, vorzugsweise und besonders vorteilhaft zu gleichen Teilen. Die beiden Strahlengänge 22, 23 durchlaufen von der Strahlungsquelle 11 zu den beiden Empfängern 17, 19 den Absorptionsraum 13 und damit den darin enthaltenen zu analysierenden Stoff. Der eine Strahlengang 22, bei dem der Teil der Strahlung der Strahlungsquelle durch den großen Spiegel 7 reflektiert wird, weist eine wesentlich größere Länge auf als der Strahlengang 22 mit der Reflektion am anderen Spiegel 9.

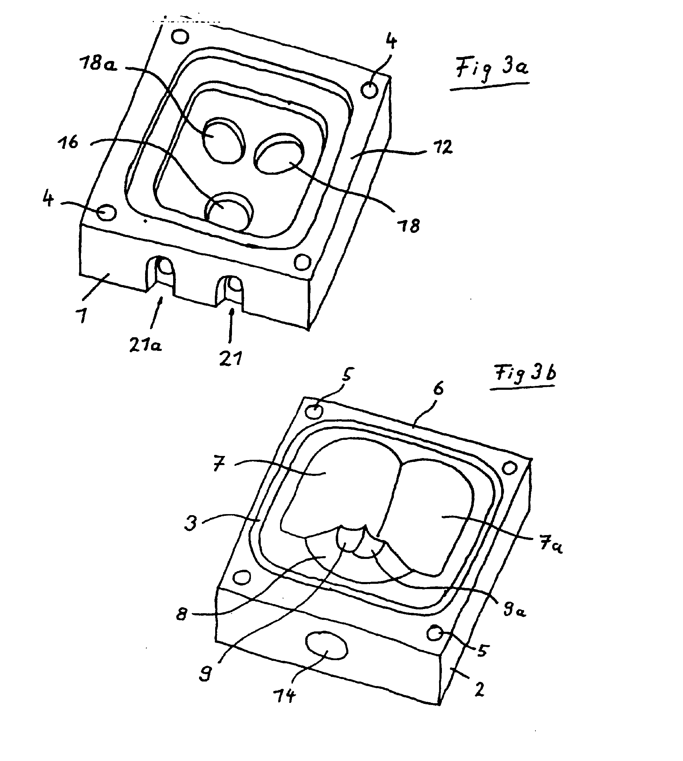

Die in Fig. 3 a/b dargestellte zweikanalige Ausführung unterscheidet sich von der in Fig. 2 a/b dargestellten einkanaligen Ausführung nur durch die Zahl der Empfänger sowie durch die Ausformung der Spiegel. Anstatt der einzelnen Empfänger in den Gehäuseöffnungen 18 und 21 in der einkanaligen Ausführung werden hier jeweils zwei Empfänger in die Gehäuseöffnungen 18 und 21 bzw. 18a und 21a eingesetzt (Fig. 3a). Die Spiegel 7 und 9 der einkanaligen Ausführung sind in der zweikanaligen Ausführung in der Ebene, die in Fig. 1 dargestellt ist, gebrochen und dergestalt von dieser orthogonal weggekippt, daß hier jeweils die Strahlungsquelle in der Gehäuseöffnung 16 und die Empfänger in den Öffnungen 18 und 21 bzw. 18a und 21a in den Fokuspunkten der Spiegel 7 und 9 bzw. 7a und 9a sitzen (Fig. 3b).

**Patentansprüche**

1. Gerät zur Bestimmung der Konzentration eines oder mehrerer Stoffe in einer Mischung durch Messung der konzentrationsabhängigen molekülspezifischen Extinktion einer Strahlung, mit
einem mit der zu messenden Probe gefüllten Absorptionsraum (13),
einer Strahlungsquelle (11) und

zwei oder einer durch zwei teilbaren Anzahl von Empfängern (17, 19), wobei jeweils ein Paar von Empfängern (17, 19) der Messung der Konzentration einer Komponente des Gemischs zugeordnet ist,

einer Einrichtung (7,9) zur Aufteilung der von der Strahlungsquelle (11) ausgehenden Strahlung in zwei oder eine durch zwei teilbare Anzahl von Strahlengängen (22, 23) zu den Empfängern (17, 19), wobei alle Strahlengänge (22, 23) von der Strahlungsquelle (11) zu den Empfängern (17, 19) die gleiche Anzahl und paarweise gleiche optische Elemente und den Stoff im Absorptionsraum (13) durchlaufen, und jeweils die beiden Strahlengänge (22, 23), die zu einem Paar von Empfängern (17, 19) führen, eine unterschiedliche optische Länge im Absorptionsraum (13) aufweisen,

einer Einrichtung, die jeweils die Extinktion in beiden Strahlengängen (22, 23) die zu einem Paar von Empfängern (17, 19) führen, auf derselben Wellenlänge misst, und

einer Einrichtung zur Bestimmung des oder der Meßwerte durch Vergleich der von den Empfängern (17, 19) eines Paares gemessenen Intensitäten

**dadurch gekennzeichnet, daß** zur Aufteilung der von der Strahlungsquelle (11) ausgehenden Strahlung zwei einem Paar von Empfängern (17, 19) zugeordnete Hohlspiegel (7, 7a, 9, 9a) vorgesehen sind, durch die die von der Strahlungsquelle (11) eingehende Strahlung auf die Empfänger (17, 19) fokussiert wird, wobei die beiden einem Paar von Empfängern (17, 19) zugeordneten Hohlspiegel (7, 7a, 9, 9a) zur Bildung unterschiedlich langer Strahlengänge (22, 23) im Absorptionsraum (13) in unterschiedlichem Abstand von der Strahlungsquelle (11) angeordnet sind.

2. Gerät nach Anspruch 1, **dadurch gekennzeichnet, daß** zumindest einer der beiden einem Paar von Empfängern (17, 19) zugeordneten Hohlspiegel (7, 7a, 9, 9a) als asphärischer Hohlspiegel ausgebildet ist.

3. Gerät nach Anspruch 2, **dadurch gekennzeichnet, daß** der asphärische Hohlspiegel (7, 7a, 9, 9a) einen Abschnitt eines Rotationsellipsoids darstellt.

4. Gerät nach einem der vorstehenden Ansprüche, **dadurch gekennzeichnet, daß** die Strahlungsquelle (11) ein elektrisch modulierbarer Flächenstrahler ist.

5. Gerät nach einem der vorstehenden Ansprüche, **dadurch gekennzeichnet, daß** der Absorptionsraum (13) durch einen Innenraum eines Gehäuses (1, 2) gebildet wird und die Hohlspiegel (7, 7a, 9, 9a) einstückig mit dem Gehäuse (1, 2) ausgebildet sind.

6. Gerät nach Anspruch 5, **dadurch gekennzeichnet, daß** das Gehäuse teilbar ausgebildet ist und die Hohlspiegel (7, 7a, 9, 9a) mit einem Gehäuseteil (2) einstückig ausgebildet sind.

7. Gerät nach Anspruch 6, **dadurch gekennzeichnet, daß** das Gehäuse aus dem Gehäuseteil (2) mit den Hohlspiegeln (7, 7a, 9, 9a) und einem weiteren Gehäuseteil (1) besteht, an dem die Strahlungsquelle (11) und die Empfänger (17, 19) angeordnet sind.

8. Gerät nach Anspruch 6 oder 7, **dadurch gekennzeichnet, daß** zumindest das Gehäuseteil (2) mit den Hohlspiegeln (7, 7a, 9, 9a) aus Metall besteht.

9. Gerät nach Anspruch 8, **dadurch gekennzeichnet, daß** das Metall ein Aluminiumwerkstoff ist.

**Claims**

1. A device for determining the concentration of one or more substances in a mixture by measuring the concentration-dependent molecule-specific extinction of radiation, comprising

an absorption chamber (13) filled with the sample to be measured,

a radiation source (11), and

two, or a number divisible by two of, receivers (17, 19), one pair of receivers (17, 19) being associated with the measurement of the concentration of each component of the mixture,

a device (7, 9) for splitting the radiation from the radiation source (11) into two, or a number divisible by two of, radiation paths (22, 23) to the receivers (17, 19), all radiation paths (22, 23) from the radiation source (11) to the receivers (17, 19) traversing the same number and pairwise identical optical elements and the substance in the absorption chamber (13), and the two radiation paths (22, 23) leading to a pair of receivers (17, 19) each having a different optical length in the absorption chamber (13),

**EP 1 183 523 B1**

a device for measuring the extinction in the two radiation paths (22, 23) leading to a pair of receivers (17, 19) at the same wavelength, and

a device for determining the measured value or values by comparison of the intensities measured by the receivers (17, 19) of a pair,

**characterized in that** for splitting the radiation from the radiation source (11) two concave mirrors (7, 7a, 9, 9a) associated with a pair of receivers (17, 19) are provided which focus the radiation arriving from the radiation source (11) onto the receivers (17, 19), the two concave mirrors (7, 7a, 9, 9a) associated with a pair of receivers (17, 19) being disposed at different distances from the radiation source (11) to form radiation paths (22, 23) of different lengths in the absorption chamber (13).

2. A device according to claim 1, **characterized in that** at least one of the two concave mirrors (7, 7a, 9, 9a) associated with a pair of receivers (17, 19) is formed as an aspheric concave mirror.

3. A device according to claim 2, **characterized in that** the aspheric concave mirror (7, 7a, 9, 9a) constitutes a section of a spheroid.

4. A device according to any of the above claims, **characterized in that** the radiation source (11) is an electrically modulable plane radiator.

5. A device according to any of the above claims, **characterized in that** the absorption chamber (13) is formed by an interior of a housing (1, 2) and the concave mirrors (7, 7a, 9, 9a) are formed integrally with the housing (1, 2).

6. A device according to claim 5, **characterized in that** the housing is of partite form and the concave mirrors (7, 7a, 9, 9a) are formed integrally with a housing part (2).

7. A device according to claim 6, **characterized in that** the housing comprises the housing part (2) with the concave mirrors (7, 7a, 9, 9a) and another housing part (1) on which the radiation source (11) and the receivers (17, 19) are disposed.

8. A device according to claim 6 or 7, **characterized in that** at least the housing part (2) with the concave mirrors (7, 7a, 9, 9a) is made of metal.

9. A device according to claim 8, **characterized in that** the metal is an aluminium material.

**Revendications**

1. Appareil pour déterminer la concentration d'une ou de plusieurs substances dans un mélange par mesure de l'extinction d'un rayonnement, spécifique en molécules et en fonction de la concentration, comportant

un espace d'absorption (13) rempli par l'échantillon à mesurer,

une source de rayonnement (11) et

deux récepteurs (17, 19) ou un nombre de récepteurs (17, 19) divisible par deux, une paire de récepteurs (17, 19) respective étant associée à la mesure de la concentration d'un composant du mélange,

un dispositif (7, 9) pour partager le rayonnement partant de la source de rayonnement (11) en deux nombres de trajectoires de faisceaux (22, 23) ou en un nombre de trajectoire de faisceaux (22, 23) divisible par deux vers les récepteurs (17, 19), toutes les trajectoires de faisceaux (22, 23) traversant, depuis la source de rayonnement (11) vers les récepteurs (17, 19), le même nombre d'éléments optiques et, par paires, les mêmes éléments optiques et la substance dans l'espace d'absorption (13), et les deux trajectoires de faisceaux (22, 23), qui mènent à une paire de récepteurs (17, 19), présentant une longueur optique différente dans l'espace d'absorption (13),

un dispositif qui mesure sur la même longueur d'onde l'extinction respective dans les deux trajectoires de faisceaux (22, 23) qui mènent à une paire de récepteurs (17, 19), et

un dispositif pour déterminer la ou les valeurs en comparant les intensités mesurées par les récepteurs (17, 19) d'une paire,

**caractérisé en ce que** pour partager le rayonnement partant de la source de rayonnement (11), il est prévu deux réflecteurs de concentration (7, 7a, 9, 9a) à travers lesquels le rayonnement provenant de la source de rayonnement (11) est focalisé sur les récepteurs (17, 19), les deux réflecteurs de concentration (7, 7a, 9, 9a) associés à une paire de récepteurs (17, 19) étant agencés dans l'espace d'absorption (13) à différentes distances de la source de rayonnement (11) pour former des trajectoires de faisceaux (22, 23) de différentes longueurs.

**2.** Appareil selon la revendication 1, **caractérisé en ce qu'**au moins un des deux réflecteurs de concentration (7, 7a, 9, 9a) associés à une paire de récepteurs (17, 19) est réalisé sous forme de réflecteur de concentration asphérique.

**3.** Appareil selon la revendication 2, **caractérisé en ce que** le réflecteur de concentration asphérique (7, 7a, 9, 9a) constitue un tronçon d'un sphéroïde.

**4.** Appareil selon l'une des revendications précédentes, **caractérisé en ce que** la source de rayonnement (11) est une antenne en nappe électriquement modulable.

**5.** Appareil selon l'une des revendications précédentes, **caractérisé en ce que** l'espace d'absorption (13) est formé par un espace intérieur d'un boîtier (1, 2) et les réflecteurs de concentration (7, 7a, 9, 9a) sont réalisés d'un seul tenant avec le boîtier (1, 2).

**6.** Appareil selon la revendication 5, **caractérisé en ce que** le boîtier est réalisé divisible et les réflecteurs de concentration (7, 7a, 9, 9a) sont réalisés d'un seul tenant avec une partie de boîtier (2).

**7.** Appareil selon la revendication 6, **caractérisé en ce que** le boîtier est constitué par la partie de boîtier (2) avec les réflecteurs de concentration (7, 7a, 9, 9a) et par une autre partie de boîtier (1) sur laquelle sont agencés la source de rayonnement (11) et les récepteurs (17, 19).

**8.** Appareil selon la revendication 6 ou 7, **caractérisé en ce qu'**au moins la partie de boîtier (2) avec les réflecteurs de concentration (7, 7a, 9, 9a) est en métal.

**9.** Appareil selon la revendication 9, **caractérisé en ce que** le métal est un matériau en aluminium.

Fig. 1

Fig. 2a

18

16

4

4

12

1

21

Fig. 2b

5

6

7

3

8

9

14

5

2

Fig 3a

Fig 3b